# EUROPEAN PATENT APPLICATION

(11) **EP 4 613 958 A1**
(43) Date of publication of application: **10.09.2025**
(21) Application number: 22966859.5
(22) Date of filing: 30.11.2022
(51) Int. Cl.: E05B 65/00

(54) **SLOT STRUCTURE, HOLDER, HOLDER DEVICE, LOCK MECHANISM AND VEHICLE**

(71) Applicant: Shenzhen Yinwang Intelligent Technologies Co., Ltd., Shenzhen, Guangdong 518129 (CN)
(72) Inventor: ZHAO, Cong, Shenzhen, Guangdong 518129 (CN); XU, Hao, Shenzhen, Guangdong 518129 (CN); SUN, Jian, Shenzhen, Guangdong 518129 (CN); ZHU, Xin, Shenzhen, Guangdong 518129 (CN); LI, Qingmeng, Shenzhen, Guangdong 518129 (CN); ZHANG, Tianzhu, Shenzhen, Guangdong 518129 (CN); SHI, Hao, Shenzhen, Guangdong 518129 (CN); XIA, Fan, Shenzhen, Guangdong 518129 (CN); ZHANG, Zhe, Shenzhen, Guangdong 518129 (CN)
(74) Representative: Gill Jennings & Every LLP
(86) International application number: PCT/CN2022/135665
(87) International publication number: WO 2024/113268

(57) **Abstract**

This application discloses a slot structure, a support, a support apparatus, a lock mechanism, and a vehicle. The slot structure includes a slot, a baffle, and a locking assembly. The slot has an opening slot, and the opening slot is used for a structure such as a support to be inserted into. The baffle is rotatably installed at an opening of the opening slot, and the baffle may rotate relative to the slot, to expose or seal the opening. A locking blocker is further disposed in the opening of the slot, the locking assembly is movably installed in the opening slot, and is in contact with the baffle, and the locking assembly has a locking station in which the locking assembly is locked to and cooperates with the locking blocker and an unlocking station in which the locking assembly is detached from the locking blocker. A first magnetic attraction portion is disposed on the locking assembly. When the first magnetic attraction portion is subject to magnetic attraction force toward a side that is of the baffle and that faces away from the locking assembly, the locking assembly may switch from the locking station to the unlocking station. **In** the structure, the locking assembly cooperates with the first magnetic attraction portion, so that when the slot structure is in an idle state, a foreign object can be prevented from entering the opening slot, and safety is higher.

## Description

### TECHNICAL FIELD

This application relates to the field of mechatronic technologies, and in particular, to a slot structure, a support, a support apparatus, a lock mechanism, and a vehicle.

### BACKGROUND

Portable terminal devices provide great convenience for daily life of consumers, and application fields of the portable terminal devices become increasingly wide. A consumer may hold a portable terminal device to use. In some cases in which it is inconvenient to hold the portable terminal device, the portable terminal device needs to be fastened to another fixed apparatus. Specifically, an adapter bracket may be disposed on the fixed apparatus, and then the portable terminal device may be fastened to the adapter bracket.

The adapter bracket herein not only needs to be capable of fastening the portable terminal device to the fixed apparatus, but also needs to facilitate installing and removing of the portable terminal device. Currently, after the portable terminal device is removed from the adapter bracket, the adapter bracket is exposed, which is easily interfered with by another foreign object and may cause a safety risk.

### SUMMARY

This application provides a slot structure, a support, a support apparatus, a lock mechanism, and a vehicle. When the slot structure is in an idle state, an opening can be sealed, a foreign object is prevented from entering the slot structure, and safety is higher.

According to a first aspect, this application provides a slot structure, where the slot structure includes a slot, a baffle, and a locking assembly. The slot has an opening slot, and the opening slot is used for a structure such as a support to be inserted into. When the slot is fastened to another structure, an opening of the opening slot faces away from the another structure and faces outward. The baffle is rotatably installed at the opening of the opening slot, and the baffle may rotate relative to the slot, to expose or seal the opening. A locking blocker is further disposed in the opening of the slot, the locking assembly is movably installed in the opening slot, and is in contact with the baffle, and the locking assembly has a locking station in which the locking assembly is locked to and cooperates with the locking blocker and an unlocking station in which the locking assembly is detached from the locking blocker. A first magnetic attraction portion is disposed on the locking assembly. When the first magnetic attraction portion is subject to magnetic attraction force toward a side that is of the baffle and that faces away from the locking assembly, the locking assembly may switch from the locking station to the unlocking station. When the locking assembly is locked to and cooperates with the locking blocker, the locking assembly is limited by the locking blocker, so that the baffle may be prevented from rotating toward an inner side of the opening slot. The baffle may block the opening of the opening slot, so that a foreign object is prevented from entering the opening slot. When the structure such as the support is inserted into the opening slot, the magnetic attraction force may be applied to the first magnetic attraction portion, so that the locking assembly switches from the locking station to the unlocking station, and a limitation on the baffle is removed. In this case, the baffle may rotate toward the inner side of the opening slot relative to the slot, to expose the opening slot, and the structure such as the support may be inserted into the opening slot. In the structure, the locking assembly cooperates with the first magnetic attraction portion, so that the slot structure can be locked and sealed in an idle state, and a foreign object is prevented from entering the opening slot. The first magnetic attraction portion is disposed, so that difficulty in unlocking the locking assembly is increased. In other words, only a structure capable of attracting the first magnetic attraction portion can unlock the locking assembly, so that the slot structure has higher safety.

**In** a possible implementation, the locking assembly includes a swinging member, a linkage member, and a sliding member. The swinging member is rotatably connected to the slot, and the sliding member slidably cooperates with the locking blocker, and is in contact with the baffle; one end of the linkage member is rotatably connected to the swinging member, and the other end of the linkage member rotatably cooperates with the sliding member; and the first magnetic attraction portion is disposed on the swinging member. The swinging member, the linkage member, and the sliding member are transmission connection structures, and form a crank-slider mechanism, so that locking and unlocking between the locking assembly and the locking blocker can be implemented.

A rotation center of the swinging member is parallel to a rotation center of the baffle, so that a rotation direction of the swinging member is consistent with a rotation direction of the baffle. This improves synchronization between the locking assembly and the baffle.

Possibly, the first magnetic attraction portion includes a magnetic material or iron. When the first magnetic attraction portion includes the magnetic material, an external structure configured to magnetically attract the first magnetic attraction portion may include a magnetic material or iron. When the first magnetic attraction portion includes the iron, the external structure configured to magnetically attract the first magnetic attraction portion may include a magnetic material.

In a possible implementation, the slot structure further includes an elastic reset member, where the elastic reset member is connected between the locking assembly and the baffle; and when the first magnetic attraction portion is subject to the magnetic attraction force toward a side that is of the baffle and that faces away from the locking assembly, the elastic reset member is in a compressed force storage state. When the first magnetic attraction portion is no longer subject to the magnetic attraction force, the elastic reset member may drive the locking assembly to reset. In other words, the locking assembly switches from the unlocking station to the locking station.

When the slot structure is used for an electronic device to be inserted into or fastened to, a charging port may be disposed in the opening slot, the slot has a connection port electrically connected to the charging port, and the connection port is configured to connect to an external power supply such as a vehicle battery. For ease of use, the charging port herein may be a contact charging port.

A fastening portion is further disposed in the opening slot, to fasten the structure inserted into the opening slot, and the fastening portion is used for the structure inserted into the opening slot to be clamped to.

In a possible implementation, an extension direction of the opening slot is inclined by an included angle to a plane on which the opening is located; and along a direction perpendicular to the plane on which the opening is located, a slot bottom of the opening slot is lower than the opening of the opening slot. When the structure such as the support is inserted into the opening of the slot structure, a shape of the opening slot helps prevent the structure such as the support from moving out of and falling from the opening slot.

In a possible implementation, a limiting stopper is further disposed in the slot, the limiting stopper is disposed on the side that is of the baffle and that faces away from the locking assembly, and the limiting stopper is located in a path in which the baffle rotates relative to the slot. When the baffle rotates toward an outer side of the opening slot relative to the slot, the limiting stopper prevents the baffle from rotating.

According to a second aspect, this application provides a support, where the support includes a panel and a support rod that is rotatably connected to the panel. The panel may be used for an electronic device to be fastened to, and a second magnetic attraction portion is disposed at an end that is of the support rod and that is away from the panel. During use, the support rod may be inserted into a structure such as a slot structure, so that the support rod is fastened. The support rod may be attracted to another structure through the second magnetic attraction portion, so that the support rod is fastened. When the support rod cooperates with the slot structure provided in the first aspect, the support rod may be inserted into and cooperate with the opening slot of the slot structure, and the second magnetic attraction portion may magnetically attract the first magnetic attraction portion, to control unlocking of the locking assembly.

A charging port is disposed on the panel, and a connection cable configured to connect the charging port to an external power supply is disposed in the support rod, to facilitate charging of the electronic device fastened to the panel. The connection cable may be disposed inside the support rod, and the connection cable may be specifically a flat cable.

In a possible implementation, the support may be fastened to the another structure in a clamping manner. A connecting member and a fastener and an unlocking member that are fastened to the connecting member are disposed in the support rod, and the fastener and the unlocking member can move synchronously with the connecting member. The connecting member is movably disposed in the support rod, and is connected to the support rod through an elastic member. The connecting member has a first work station in which the fastener and the unlocking member protrude from the support rod and a second work station in which the fastener is hidden in the support rod. The elastic member has a tendency to maintain the connecting member in the first work station.

In a possible implementation, a crushing upon impact portion is disposed on the support rod; and along an extension direction of the support rod, when impact force applied to the support rod reaches a specified threshold, the crushing upon impact portion crushes, deforms, or breaks. The specified threshold is force capable of failing a material of the support rod.

According to a third aspect, this application further provides a support apparatus. The support apparatus may include the slot structure provided in the first aspect and the support provided in the second aspect. The support rod of the support is configured to be inserted into and cooperate with the opening slot of the slot structure, and the second magnetic attraction portion on the support rod is configured to magnetically attract the first magnetic attraction portion on the slot structure.

According to a fourth aspect, this application further provides a vehicle, including a vehicle body, where the slot structure provided in the first aspect or the support apparatus provided in the third aspect is disposed in the vehicle body.

According to a fifth aspect, this application further provides a lock mechanism, a lock body, and a lock cylinder. A locking blocker is disposed on the lock body, and the lock cylinder is movably installed on the lock body. The lock cylinder has a locking station in which the lock cylinder is locked to and cooperates with the locking blocker and an unlocking station in which the lock cylinder is detached from the locking blocker. A first magnetic attraction portion is further disposed on the lock cylinder. When the first magnetic attraction portion is magnetically attracted, the lock cylinder switches from the locking station to the unlocking station. Unlocking of the lock mechanism is controlled through the first magnetic attraction portion, and the lock cylinder can be unlocked only when the first magnetic attraction portion is magnetically attracted, so that the lock mechanism has relatively high safety.

Possibly, the lock cylinder includes a swinging member, a linkage member, and a sliding member. The swinging member is rotatably connected to the lock body, and the sliding member slidably cooperates with the locking blocker; one end of the linkage member is rotatably connected to the swinging member, and the other end of the linkage member slidably cooperates with the sliding member; and the first magnetic attraction portion is disposed on the swinging member. When the first magnetic attraction portion is magnetically attracted, the swinging member rotates relative to the lock body, and drives, through the linkage member, the sliding member to slide out of the locking blocker, to unlock the lock cylinder.

The lock mechanism further includes an elastic reset member, to reset the lock cylinder, where the elastic reset member is connected between the lock cylinder and the lock body; and when the first magnetic attraction portion is magnetically attracted, the elastic reset member is in a compressed force storage state. When the first magnetic attraction portion is no longer magnetically attracted, the elastic reset member releases elastic potential energy, and may drive the swinging member to reset, so that the sliding member cooperates with the locking blocker again. In this way, the lock cylinder switches from the unlocking station to the locking station.

### BRIEF DESCRIPTION OF DRAWINGS

FIG. 1 is a diagram of a structure of a lock mechanism according to an embodiment of this application;
FIG. 2a is a diagram of a structure of a lock mechanism in which a lock cylinder is in a locking station according to an embodiment of this application;
FIG. 2b is a diagram of a structure of a lock mechanism in which a lock cylinder switches from a locking station to an unlocking station according to an embodiment of this application;
FIG. 2c is a diagram of a structure of a lock mechanism in which a lock cylinder is in an unlocking station according to an embodiment of this application;
FIG. 3a is a diagram of a structure of a lock mechanism according to an embodiment of this application;
FIG. 3b is a diagram of a structure of a lock mechanism according to an embodiment of this application;
FIG. 3c is a diagram of a structure of a lock mechanism according to an embodiment of this application;
FIG. 4a is a diagram of a structure of a lock mechanism according to an embodiment of this application;
FIG. 4b is a diagram of a structure of a lock mechanism according to an embodiment of this application;
FIG. 4c is a diagram of a structure of a lock mechanism according to an embodiment of this application;
FIG. 5a is a diagram of a structure of a slot structure according to an embodiment of this application;
FIG. 5b is a diagram of a structure of a slot structure according to an embodiment of this application;
FIG. 5c is a diagram of a structure of a slot structure according to an embodiment of this application;
FIG. 6a is a diagram of a structure of a slot structure according to an embodiment of this application;
FIG. 6b is a diagram of a structure of a slot structure according to an embodiment of this application;
FIG. 7 is a diagram of a structure of a slot structure according to an embodiment of this application;
FIG. 8a is a diagram of a structure of a slot structure in which a locking assembly is in a locking station according to an embodiment of this application;
FIG. 8b is a diagram of a structure of a slot structure in which a locking assembly switches from a locking station to an unlocking station according to an embodiment of this application;
FIG. 8c is a diagram of a structure of a slot structure in which a baffle is opened according to an embodiment of this application;
FIG. 8d is a diagram of a structure of a slot structure in which a baffle is closed according to an embodiment of this application;
FIG. 9a is a diagram of a structure of a slot structure according to an embodiment of this application;
FIG. 9b is a diagram of a structure of a slot structure according to an embodiment of this application;
FIG. 9c is a diagram of a structure of a slot structure according to an embodiment of this application;
FIG. 10 is a diagram of a structure of a slot structure according to an embodiment of this application;
FIG. 11 is a diagram of a structure of a slot structure according to an embodiment of this application;
FIG. 12 is a diagram of a structure of a slot structure according to an embodiment of this application;
FIG. 13 is a diagram of a structure of a slot structure according to an embodiment of this application;
FIG. 14 is a diagram of a structure of a support according to an embodiment of this application;
FIG. 15a is a diagram of a structure of a support according to an embodiment of this application;
FIG. 15b is a diagram of a structure of a support according to an embodiment of this application;
FIG. 15c is a diagram of a structure of a support according to an embodiment of this application;
FIG. 16a is a diagram of a structure of a support according to an embodiment of this application;
FIG. 16b is a diagram of a structure of a support according to an embodiment of this application;
FIG. 17a is a diagram of a structure of a support according to an embodiment of this application;
FIG. 17b is a diagram of a structure of a support according to an embodiment of this application;
FIG. 18a is a diagram of a structure of a support according to an embodiment of this application;
FIG. 18b is a diagram of a structure of a support according to an embodiment of this application;
FIG. 19 is a diagram of a structure of a support according to an embodiment of this application;
FIG. 20a is a diagram of a structure of a support according to an embodiment of this application;
FIG. 20b is a diagram of a structure of a support according to an embodiment of this application;
FIG. 21a is a diagram of a structure of a support according to an embodiment of this application;
FIG. 21b is a diagram of a structure of a support according to an embodiment of this application;
FIG. 22 is a diagram of a structure of a support apparatus according to an embodiment of this application;
FIG. 23a is a diagram of a structure of a support apparatus in which a support is not inserted into a slot structure according to an embodiment of this application;
FIG. 23b is a diagram of a structure of a support apparatus in which a locking assembly is in an unlocking station according to an embodiment of this application;
FIG. 23c is a diagram of a structure of a support apparatus in which a support is inserted into a slot structure according to an embodiment of this application;
FIG. 23d is a diagram of a structure of a support apparatus in which a support is inserted into and cooperates with a slot structure according to an embodiment of this application;
FIG. 24 is a diagram of a structure of a vehicle according to an embodiment of this application;
FIG. 25a is a diagram of a structure of a front-row seat that is in a vehicle and on which a slot structure is disposed according to an embodiment of this application; and
FIG. 25b is a diagram of a structure of a front-row seat that is in a vehicle and on which a support apparatus is disposed according to an embodiment of this application.

### DESCRIPTION OF EMBODIMENTS

In a conventional technology, a portable terminal device may be fastened to another fixed apparatus through an adapter bracket, to facilitate a consumer to use the portable terminal device, so that the consumer can free both hands to rest or do another thing. The adapter bracket needs to have a function to facilitate installing and removing of the portable terminal device. In addition, when the portable terminal device is removed from the adapter bracket, a structure that is of the adapter bracket and that is configured to cooperate with the portable terminal device is exposed, impact of being interfered or damaged by another foreign object exists, and a safety risk further exists.

Based on this, embodiments of this application provide a slot structure, a support, a support apparatus, a lock mechanism, and a vehicle. The slot structure and the support may cooperate with each other to fasten the portable terminal device to the fixed apparatus, to facilitate use by the consumer. When the slot structure is in an idle state, a foreign object is prevented from entering the slot structure, and safety is higher.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include forms such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

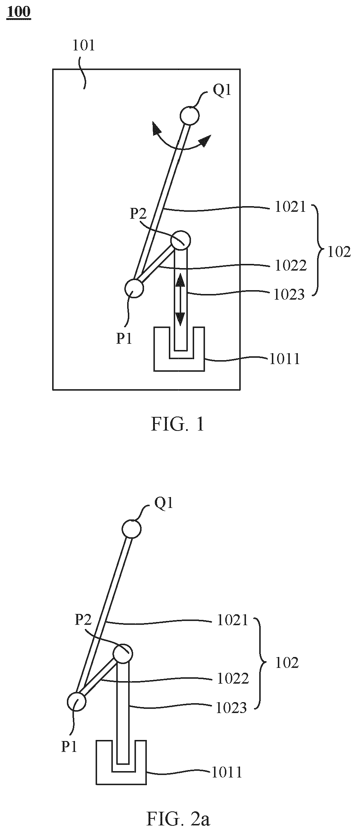

As shown in FIG. 1, an embodiment of this application provides a lock mechanism 100. The lock mechanism 100 can be used in a scenario of locking and unlocking another structure. For example, a cabinet door is locked, to prevent the cabinet door from being opened when the cabinet door does not need to be opened. The lock mechanism 100 includes a lock body 101 and a lock cylinder 102. The lock body 101 may be fastened to a fixed apparatus, and the fixed apparatus has a movable apparatus. A cabinet is used as an example. A cabinet body is a fixed apparatus, and a cabinet door is a movable apparatus. The lock body 101 may be fastened to the cabinet body, and the lock cylinder 102 is movably installed on the lock body 101, so that the lock cylinder 102 can move relative to the lock body 101. For example, the lock cylinder 102 may slide or swing relative to the lock body 101. A locking blocker 1011 is disposed on the lock body 101. When the lock cylinder 102 moves relative to the lock body 101, the lock cylinder 102 has a locking station in which the lock cylinder 102 is locked to and cooperates with the locking blocker 1011 and an unlocking station in which the lock cylinder 102 is detached from the locking blocker 1011. A structure of the locking blocker 1101 is not limited, and a function of the locking blocker 1101 is to be able to be locked to and cooperate with the lock cylinder 102 to limit movement of the lock cylinder 102 relative to the lock body 101 in a specified direction, that is, to limit movement of the lock cylinder 102 in a specific direction. During status switching between the locking station and the unlocking station of the lock cylinder 102, the lock cylinder 102 may move relative to the locking blocker 1101. For example, when the lock cylinder 102 is locked to and cooperates with the locking blocker 1101, the lock cylinder 102 cannot slide relative to the locking blocker 1101 along a first direction. Herein, that the lock cylinder 102 is locked to and cooperates with the locking blocker 1101 means that movement of the lock cylinder 102 relative to the locking blocker along the first direction is limited. Locking and unlocking actions of the lock cylinder 102 may be movement of the lock cylinder 102 relative to the locking blocker along a second direction, and the second direction is different from the first direction.

For example, the lock cylinder 102 includes a swinging member 1021, a linkage member 1022, and a sliding member 1023. The swinging member 1021 may be rotatably connected to the lock body 101 around a first rotation center Q1. In other words, the swinging member 1021 may rotate around the first rotation center Q1. For example, the sliding member 1023 slidably cooperates with the locking blocker 111. One end of the linkage member 1022 is rotatably connected to the swinging member 1021, and a center of rotation connection between the linkage member 1022 and the swinging member 1021 is a first hinging center P1. The other end of the linkage member 1022 is rotatably connected to the sliding member 1023, and a center of rotation connection between the linkage member 1022 and the sliding member 1023 is a second hinging center P2. The swinging member 1021, the linkage member 1022, and the sliding member 1023 may form a crank-slider mechanism. When the swinging member 1021 rotates relative to the lock body 101, the sliding member 1023 can be driven to slide along a specified direction. Herein, for example, the locking blocker 1011 is in a slot shape, and a sliding direction of the sliding member 1023 is an extension direction of the locking blocker 1011. When the sliding member 1023 slides into the locking blocker 1011, the sliding member 1023 can be locked to and cooperate with the locking blocker 1011, so that the lock cylinder 102 cannot rotate relative to the lock body 101 around the first rotation center Q, and the lock cylinder 102 is locked and limited relative to the lock body 101. In other words, in a direction perpendicular to the sliding direction of the sliding member 1023, the locking blocker 1011 may limit the sliding member 1023.

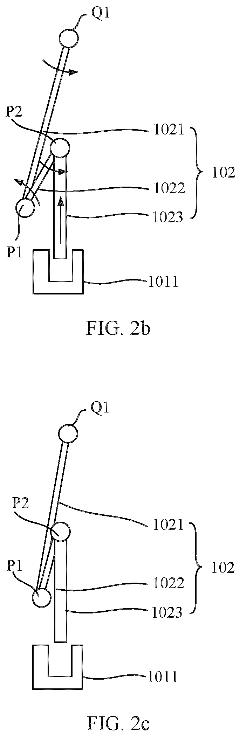

Refer to FIG. 2a to FIG. 2c. A working process of locking and unlocking the mechanism 100 in this embodiment of this application is described. For ease of understanding, the lock body 101 is not shown herein. As shown in FIG. 2a, the sliding member 1023 of the lock cylinder 102 falls into the locking blocker 1011 on the lock body 101, and the locking blocker 1011 limits and locks the sliding member 1023 in the direction perpendicular to the sliding direction. As shown in FIG. 2b, when the swinging member 1021 is driven to rotate around the first rotation center Q1 counterclockwise, the linkage member 1022 rotates relative to the swinging member 1021 around the first hinging center P1 counterclockwise, and the sliding member 1023 rotates relative to the linkage member 1022 around the second hinging center P2 counterclockwise. Because the sliding member 1023 slidably cooperates with the locking blocker 1011 along the specified direction, the sliding member 1023 may move along the specified direction. In FIG. 2a, the specified direction is a vertical direction. The sliding member 1023 moves upward to be detached from the locking blocker 1011, as shown in FIG. 2c. When the sliding member 1023 moves out of the locking blocker 1011, the lock cylinder 102 is in the unlocking station.

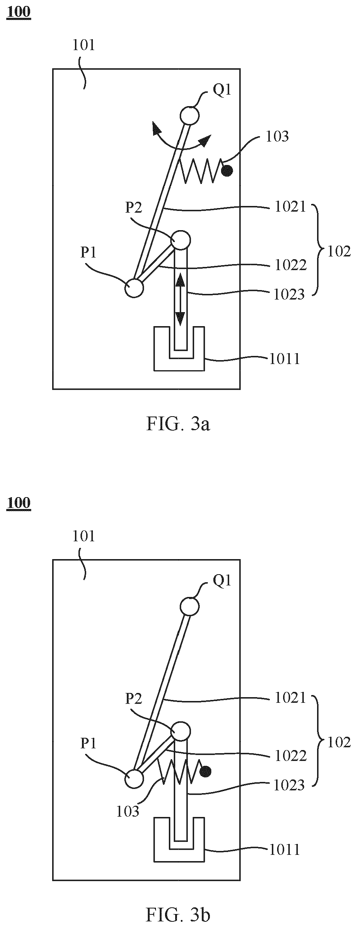

As shown in FIG. 3a, for example, an elastic reset member 103 is further connected between the swinging member 1021 and the lock body 101, and the elastic reset member 103 has elastic potential energy that drives the swinging member 1021 to reset. When the lock cylinder 102 is in a state shown in FIG. 1, that is, when the lock cylinder 102 is in the locking station, the elastic reset member 103 is in a relaxed state. When the swinging member 1021 swings around the first rotation center Q1, the elastic reset member 103 is compressed or stretched to generate elastic potential energy. Refer to FIG. 2a to FIG. 2c. When the lock cylinder 102 switches from the locking station to the unlocking station, the elastic reset member 103 is compressed to generate elastic potential energy. When the lock cylinder 102 is in a state shown in FIG. 2c, if there is no external force to maintain a position of the lock cylinder 102, the elastic reset member 103 can drive, by releasing elastic potential energy, the sliding member 1023 to slide into the locking blocker 1011, so that the lock cylinder 102 switches from the unlocking station to the locking station. For example, the elastic reset member 103 is a spring. As shown in FIG. 3b, the elastic reset member 103 may alternatively be disposed between the linkage member 1022 and the lock body 101.

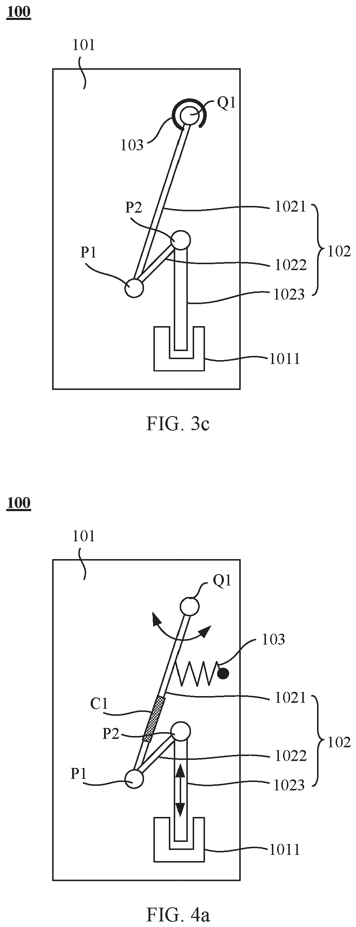

In some embodiments, as shown in FIG. 3c, the elastic reset member 103 is a torsion spring and is disposed around the first rotation center Q1. Certainly, the elastic reset member 103 may alternatively be another structure, for example, a structure such as a snap spring or an elastic rubber strip. Details are not described herein again.

A manner of controlling an action of the lock cylinder 102 may be magnetism controlling. As shown in FIG. 4a, a first magnetic attraction portion C1 is disposed on the swinging member 1021 of the lock cylinder 102. When there is another magnetic attraction portion that magnetically attracts the first magnetic attraction portion C1, the first magnetic attraction portion C1 drives the swinging member 1021 to rotate counterclockwise, and drives the sliding member 1023 to slide out of the locking blocker 1011, so that the lock cylinder 102 can be unlocked. Herein, the first magnetic attraction portion C1 may include a magnetic material or iron. In addition, an entire structure of the swinging member 1021 may alternatively include a magnetic material or iron. In other words, the swinging member 1021 is used as the first magnetic attraction portion C1 as a whole. The first magnetic attraction portion C1 is disposed, so that the lock cylinder 102 is driven to be unlocked only when the first magnetic attraction portion C1 is magnetically attracted. In this way, locking and unlocking of a structure 10 has higher safety.

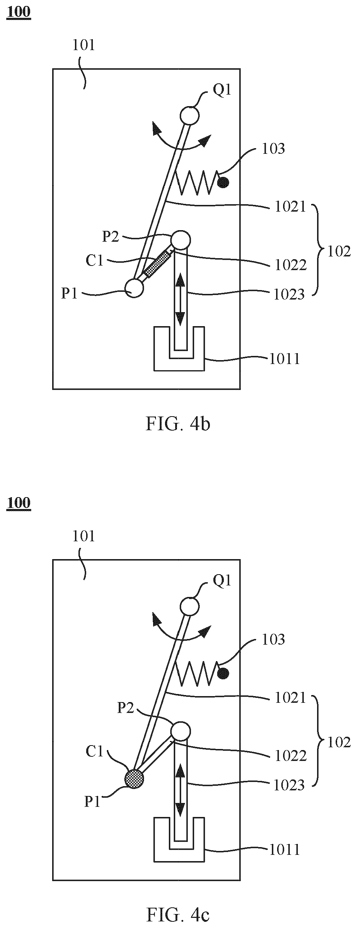

The first magnetic attraction portion C1 may be disposed on the swinging member 1021 as shown in FIG. 4a, or may be disposed on the linkage member 1022 as shown in FIG. 4b. When the swinging member 1021 is rotatably connected to the linkage member 1022 through a hinging portion such as a pin shaft, as shown in FIG. 4c, the first magnetic attraction portion C1 may alternatively be disposed on the hinging portion between the swinging member 1021 and the linkage member 1022, that is, a position of the first hinging center P1. It should be understood that, from a perspective of mechanics, the first magnetic attraction portion C1 is disposed at a position that is on the swinging member 1021 and that is close to the first hinging center P1, so that a higher benefit can be achieved. In other words, larger displacement effect is achieved through smaller magnetic attraction force.

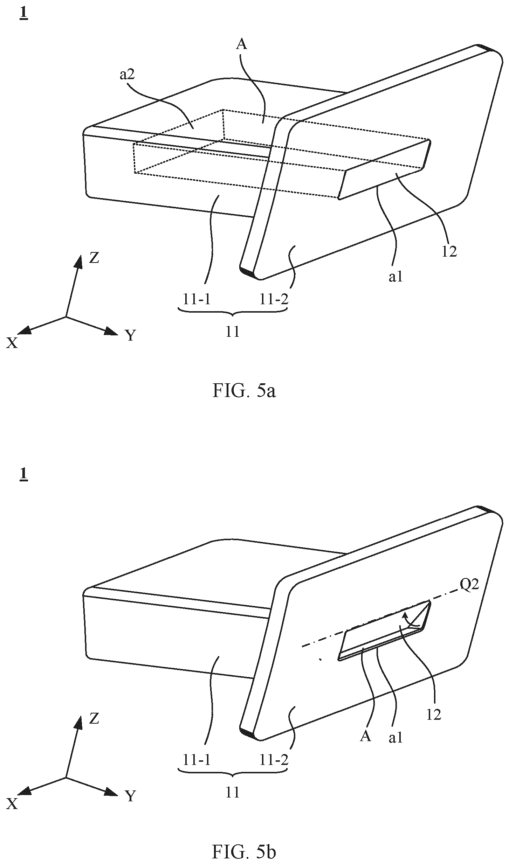

An embodiment of this application further provides a slot structure 1. As shown in FIG. 5a, the slot structure 1 has an opening slot A, the opening slot A has an opening a1, and another structure may be inserted into the opening slot A through the opening a1. When the slot structure 1 is fastened to a fixed apparatus, for example, a seat of a vehicle, the slot structure 1 should be in a state in which the opening a1 of the opening slot A faces away from the seat and faces outward. It is specified that the opening a1 is located on a plane, and a first direction X, a second direction Y, and a third direction Z that are perpendicular to each other are defined by using the plane on which the opening a1 is located as a reference. A plane formed by the first direction X and the third direction Z is parallel to the plane on which the opening a1 is located. To facilitate understanding of this solution, the first direction X may be a horizontal direction, and the third direction Z may be a vertical direction. Certainly, it should be understood that the opening a1 may not be on a plane, and the plane on which the opening a1 is located herein may be roughly considered as a plane.

Refer to examples shown in FIG. 5a and FIG. 5b together. The slot structure 1 provided in this embodiment of this application specifically includes a slot 11, and the slot 11 may be fastened to the fixed apparatus. For example, the slot 11 may be fastened to a back of a front-row seat of a vehicle, or may be fastened to a head of a bed. The slot 11 has the opening slot A. Corresponding to the opening a1, along an extension direction of the opening slot A, the opening slot A further has a slot bottom a2 that is opposite to the opening a1. The extension direction of the opening slot A may be considered as a direction in which the slot bottom a2 points to the opening a1 or the opening a1 points to the slot bottom a2, and the extension direction of the opening slot A is not necessarily perpendicular to the plane on which the opening a1 is located. For example, the opening a1 is on a plane, and the slot bottom a2 may also be on a plane. The plane on which the slot bottom a2 is located may be maintained parallel to the plane on which the opening a1 is located, or the plane on which the slot bottom a2 is located is inclined by an included angle to the plane on which the opening a1 is located. This is not limited in this embodiment of this application. A baffle 12 is rotatably installed at the opening a1 of the opening slot A. A shape of the baffle 12 adapts to the opening a1 of the opening slot A. When the baffle 12 cooperates with the opening a1 of the opening slot A, the baffle 12 may basically cover the opening a1. This is equivalent to that the baffle 12 seals the opening a1, so that a foreign object cannot enter the opening slot A through the opening a1. FIG. 5b shows a state in which the baffle 12 covers the opening a1. In other words, the baffle 12 is in a closed state. Because the opening slot A is located in the slot 11 and is hidden, the opening slot A in FIG. 2a is shown by a dashed line.

With reference to FIG. 5a and FIG. 5b, the baffle 12 may rotate relative to the slot 11 around a second rotation center Q2. For example, the first rotation center Q2 of the baffle 12 is parallel to the first direction X herein. When the baffle 12 rotates around the second rotation center Q2 toward the slot bottom a2, the baffle 12 opens, to expose the opening slot A. When another structure needs to be inserted into the opening slot A, the baffle 12 may be driven to rotate toward the slot bottom a2 of the opening slot A, to expose the opening slot A, and a support rod 22 may enter the opening slot A through the opening a1. When no structure needs to be inserted into the opening slot A, when the baffle 12 seals the opening a1, the opening slot A may be protected, so that a foreign object is prevented from entering the opening slot A, blocking the opening slot A, or damaging the opening slot A. It should be understood that, that the baffle 12 seals the opening a1 is merely a description of a macro state. The baffle 12 is rotatable. Therefore, there is a specific structural gap between the baffle 12 and an edge of the opening a1, so that the baffle 12 can rotate.

Still refer to FIG. 5a and FIG. 5b. The slot 11 specifically includes a slot body 11-1 and an end panel 11-2. The opening slot A is provided on the slot body 11-1, the end panel 11-2 is located at an end that is of the slot body 11-1 and on which the opening a1 is provided, and the end panel 11-2 exposes the opening a1 of the opening slot A. The baffle 12 may be installed on the slot body 11-1, or may be installed on the end panel 11-2. An extension direction of the slot body 11-1 is also the extension direction of the opening slot A, and a cross-sectional size of the slot body 11-1 is less than a cross-sectional size of the end panel 11-2 along the extension direction of the slot body 11-1. A projection of the slot body 11-1 onto the end panel 11-2 along the extension direction of the opening slot A is located in a cross-sectional range that is of the end panel 11-2 and that is perpendicular to the extension direction of the opening slot A. On the plane on which the opening a1 is located, an edge of the end panel 11-2 fans out of an edge of the slot body 11-1. In application, objects such as a bag strap, a hanging decoration, and clothes may be hung on the slot body 11-1, and the end panel 11-2 can prevent the hung object from falling from the slot body 11-1. For example, a vertical load of the slot body 11-1 is set to 25 kg, so that the slot 11 may be extended to a coat and hat stand. The slot body 11-1 and the end panel 11-2 may be made of a metal material. For example, a length of the slot body 11-1 is 99 mm, a size of the end panel 11-2 along the first direction X is 96 mm, and a size of the end panel 11-2 along the third direction Z is 50 mm. A weight of the entire slot structure 1 is 220 g. In a subsequent embodiment, for ease of illustration, a part of the end panel 11-2 may be properly hidden.

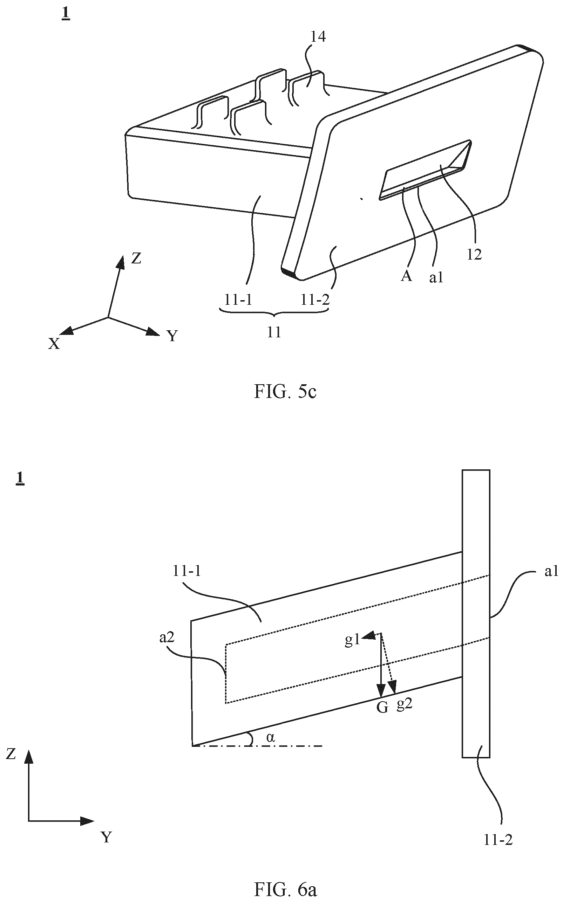

As shown in FIG. 5c, for example, an installing portion 15 is disposed on the slot 1 of the slot structure 1, and the installing portion 15 may be clamped and fastened to another structure, to fasten the slot structure 1 to the another structure.

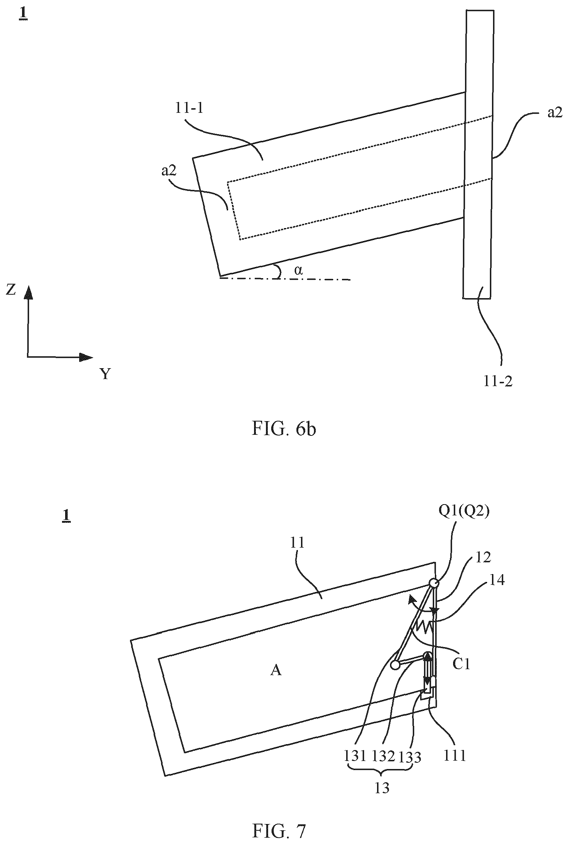

In a left view of the slot structure 1 shown in FIG. 6a, the extension direction of the opening slot A is inclined to a horizontal plane by an included angle α, and the horizontal direction herein is perpendicular to the third direction Z. With the horizontal plane as a reference, the opening a1 of the opening slot A is higher than the slot bottom a2. When another structure is inserted into the opening slot A, gravity G of the structure is decomposed into first component force g1 and second component force g2. The first component force g1 is along a direction in which the opening a1 of the opening slot A points to the slot bottom a2, and the second component force g2 is perpendicular to a slot wall of the opening slot A, so that the structure inserted into the opening slot A can be prevented from moving out of and falling from the opening slot A. In FIG. 6a, the plane on which the slot bottom a2 of the opening slot A is located is maintained flush with the plane on which the opening a1 is located. Possibly, as shown in FIG. 6b, the slot bottom a2 of the opening slot A is perpendicular to the extension direction of the opening slot A, and the plane on which the slot bottom a2 of the opening slot A is located is inclined by the included angle α to the plane on which the opening a1 is located. Certainly, the slot bottom a2 of the opening slot A may alternatively be disposed in another manner, and only an example is provided herein for description.

As shown in FIG. 7, a locking assembly 13 is further disposed in the slot structure 1 provided in this embodiment of this application, so that the baffle 12 is prevented from rotating when being accidentally touched and consequently failing to seal the opening a1 of the opening slot A. The locking assembly 13 is specifically located on a side that is of the baffle 12 and that faces the slot bottom a2, and the locking assembly 13 is disposed in the opening slot A and may move relative to the opening slot A. In the opening slot A of the slot 11, a locking blocker 111 configured to cooperate with the locking assembly 13 is disposed, and the locking blocker 111 may be specifically located in the opening slot A. The locking assembly 13 has a locking station in which the locking assembly 13 is locked to and cooperates with the locking blocker 111 and an unlocking station in which the locking assembly 13 is detached from the locking blocker 111. When the locking assembly 13 is in the locking station, the locking assembly 13 cooperates with the locking blocker 111. In this case, the locking assembly 13 and the slot 11 are maintained fastened and limited in a specified direction. Specifically, when the baffle 12 rotates around the second rotation center Q2 toward the slot bottom a2 of the opening slot A, the locking assembly 13 may prevent the baffle 12 from rotating. The locking assembly 13 may be in contact with the baffle 12. When the baffle 12 rotates toward the slot bottom a2 of the opening slot A, the locking assembly 13 can prevent the baffle 12 from rotating toward the slot bottom a2 of the opening slot A in a timely manner, to prevent the baffle 12 from leaving the opening a1 of the opening slot A and exposing the opening a1. Herein, an action by the baffle 12 of rotating toward the slot bottom a2 of the opening slot A to expose the opening a1 may be considered as opening of the baffle 12.

For example, the locking assembly 13 may include a swinging member 131, a linkage member 132, and a sliding member 133. The swinging member 131 is rotatably connected to the slot 11, and one end of the swinging member 131 may be rotatably installed in the opening slot A around a first rotation center Q1. For example, the first rotation center Q1 of the swinging member 131 coincides with the second rotation center Q2 of the baffle 12. The sliding member 133 slidably cooperates with the locking blocker 111 along the third direction Z. One end of the linkage member 132 is rotatably connected to the swinging member 131, and the other end rotatably cooperates with the sliding member 133. The swinging member 131, the linkage member 132, and the sliding member 133 form a crank-slider component. When the swinging member 131 rotates relative to the slot 11, the sliding member 133 may be driven to move along the third direction Z. The locking blocker 111 is in a slot shape, and an extension direction of the locking blocker 111 is parallel to the third direction Z. When the sliding member 133 slides into the locking blocker 111, the sliding member 133 can be prevented from moving along a direction perpendicular to the second direction Y, to limit the locking assembly 13, and the locking assembly 13 cannot rotate around the first rotation center Q1. In this case, the baffle 12 cannot be opened because the baffle 12 is blocked by the locking assembly 13. The sliding member 133 may be in contact with the baffle 12. When the sliding member 133 is driven by the swinging member 131 and the linkage member 132, the sliding member 133 may slide on the baffle 12. It should be understood that, when the sliding member 133 is detached from the locking blocker 111, a sliding direction of the sliding member 133 is determined based on a rotation direction of the swinging member 131, and is not limited to the third direction Z. The sliding member 133 may slide along a surface of the baffle 12. For example, an elastic reset member 14 is further connected between the swinging member 131 and the baffle 12, and the elastic reset member 14 has elastic potential energy that drives the baffle 12 to reset.

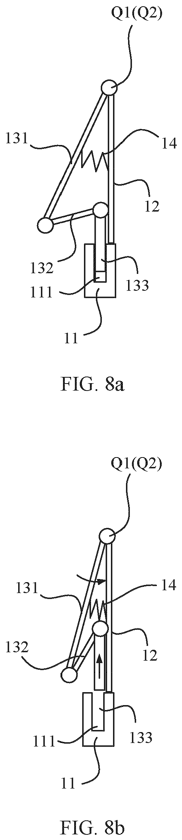

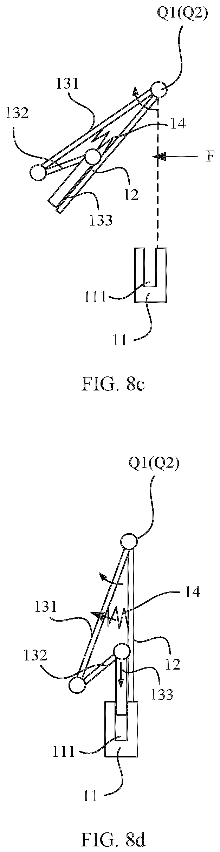

With reference to FIG. 7, a working process of the locking assembly 13 in this embodiment of this application is described with reference to simple diagrams of structures of the locking assembly 13 and the baffle 12 shown in FIG. 8a to FIG. 8d. The locking assembly 13 is disposed on the side that is of the baffle 12 and that faces the slot bottom a2, and the baffle 12 is located on a side that is of the locking assembly 13 and that is away from the slot bottom a2. The opening slot A is not shown in FIG. 8a and FIG. 8b. As shown in FIG. 8a, the sliding member 133 of the locking assembly 13 falls into the locking blocker 111 on the slot 11, the sliding member 133 is located on the side that is of the baffle 12 and that faces the slot bottom a2, and the sliding member 133 may prevent the baffle 12 from rotating around the second rotation center Q2 toward the slot bottom a2 to open. As shown in FIG. 8b, when the swinging member 131 is driven to rotate around the second rotation center Q2 counterclockwise, the sliding member 133 may be driven through the linkage member 132 to move upward along the surface of the baffle 12 to be detached from the locking blocker 111. When the sliding member 133 moves out of the locking blocker 111, the locking assembly 13 is in the unlocking station. It is specified that a position of the baffle 12 is relatively fixed, and because of an action of the swinging member 131, the elastic reset member 14 is compressed to generate elastic potential energy. Further, as shown in FIG. 8c, when force F facing the slot bottom a2 is applied to the baffle 12, the baffle 12 rotates around the second rotation center Q2 clockwise. When the sliding member 133 of the locking assembly 13 abuts against the baffle 12, and the locking assembly 13 is in the unlocking station, an action of the baffle 12 drives the locking assembly 13 to rotate clockwise. When the force F disappears, as shown in FIG. 8d, the baffle 12 may rotate around the second rotation center Q2 counterclockwise to reset under an action of gravity, and the elastic reset member 14 releases elastic potential energy. It is specified that the position of the baffle 12 is relatively fixed, and elastic potential energy released by the elastic reset member 14 drives the swinging member 131 to rotate around the first rotation center Q1 clockwise, and the sliding member 133 is driven through the linkage member 132 to slide into the locking blocker 111, so that the locking assembly 13 is finally locked. For example, the elastic reset member 14 is a spring.

With reference to FIG. 7 and FIG. 8a to FIG. 8d, when the locking assembly 13 is in the locking station, the locking assembly 13 is fixed relative to the slot 11, and the locking assembly 13 may limit and block the baffle 12. The baffle 12 may be locked to a state in which the opening a1 is closed, and the baffle 12 will not be driven by external force to open. In this case, external force is applied to the baffle 12, the locking assembly 13 is located on the other side of the external force of the baffle 12, and the locking assembly 13 applies blocking force to the baffle 12 to prevent the baffle 12 from rotating. When the baffle 12 is accidentally touched, because the baffle 12 is blocked by the locking assembly 13, the baffle 12 does not open and expose the opening a1, and does not expose the opening slot A. This prevents a foreign object from entering the opening slot A, and may also protect the opening slot A. When the locking assembly 13 is in the unlocking station, the locking assembly 13 is not locked to and does not cooperate with the locking blocker 111, and the locking assembly 13 is free relative to the locking blocker 111. In this case, driving force is applied to the baffle 12, and the locking assembly 13 does not block the baffle 12. The action of rotating the baffle 12 toward the slot bottom a2 of the opening slot A drives the locking assembly 13 to move together. In this case, the baffle 12 opens to expose the opening a1, and the support rod 22 of a support 2 may be inserted into the opening slot A through the opening a1, to complete insertion and cooperation between the support 2 and the slot structure 1.

When the slot structure 1 is used with the support 2, an action of the locking assembly 13 may be controlled by a to-be-inserted structure that needs to be inserted into the opening slot A, to prevent the opening a1 of the opening slot A from being exposed as a result of accidental touching of the baffle 12. Specifically, it may be specified that when the to-be-inserted structure approaches the baffle 12, the support rod 22 may drive the locking assembly 13 to move and unlock. When the to-be-inserted structure approaches and applies action force to the baffle 12, the locking assembly 13 does not block the baffle 12, the baffle 12 may open to expose the opening a1, and the to-be-inserted structure may be smoothly inserted into the opening slot A through the opening a1.

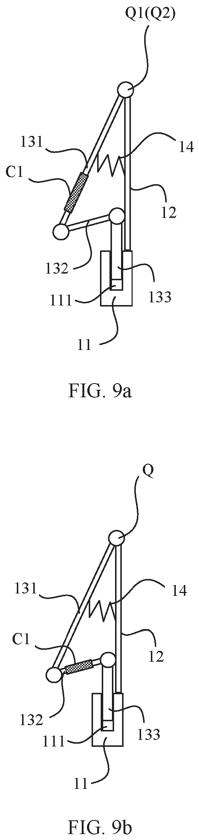

For example, as shown in FIG. 9a to FIG. 9c, the first magnetic attraction portion C1 is disposed on the locking assembly 13, and the first magnetic attraction portion C1 may be magnetically attracted and perform an action. Refer to FIG. 7 and FIG. 9a together, when a to-be-inserted member that can magnetically attract the first magnetic attraction portion C1 approaches the baffle 12, and a distance between the to-be-inserted member and the baffle 12 is close enough for the magnetic core to attract the first magnetic attraction portion C1, the first magnetic attraction portion C1 drives the locking assembly 13 to rotate around the first rotation center Q1 counterclockwise, the sliding member 133 slides out of the locking blocker 111, the locking assembly 13 switches from the locking station to the unlocking station, and the locking assembly 13 may unlock the baffle 12. The to-be-inserted member may push the baffle 12 to rotate toward the slot bottom a2, the baffle 12 opens to expose the opening a1, and the to-be-inserted member may be inserted into the opening slot A. The first magnetic attraction portion C1 may include a magnetic material, or may include iron.

Refer to FIG. 8a to FIG. 8d and FIG. 9a. In the swinging member 131, the linkage member 132, and the sliding member 133, the first magnetic attraction portion C1 may be disposed on the swinging member 131. When the first magnetic attraction portion C1 is magnetically attracted by an external structure, the swinging member 131 rotates around the first rotation center toward a side close to the baffle 12, and the swinging member 131 drives, through the linkage member 132, the sliding member 133 to slide in a direction away from the locking blocker 111. When the sliding member 133 is detached from the locking blocker 111, the locking assembly 13 is in the unlocking station. In this case, the entire locking assembly 13 may rotate around the first rotation center Q1, and drive the baffle 12 to rotate toward the slot bottom a2 of the opening slot A, so that the baffle 12 may be opened. When there is no external magnetic attraction to the first magnetic attraction portion C1, the sliding member 133 may fall into the locking blocker 111 under an action of gravity, so that the locking assembly 13 is in the locking station, and the baffle 12 is prevented from being opened. In addition, an entire structure of the swinging member 131 may alternatively include a magnetic material or iron. In other words, the swinging member 131 is used as the first magnetic attraction portion C1 as a whole.

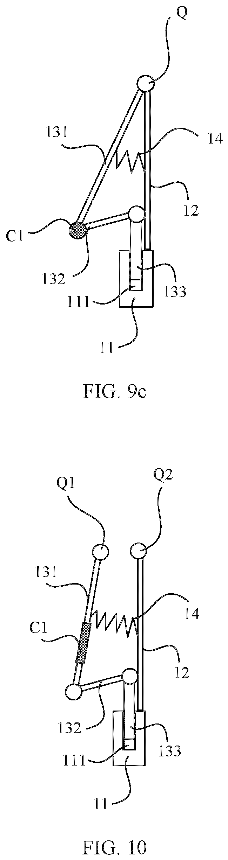

The first magnetic attraction portion C1 may be disposed on the swinging member 131 as shown in FIG. 9a, or may be disposed on the linkage member 132 as shown in FIG. 9b. When the swinging member 131 is rotatably connected to the linkage member 132 through a hinging portion such as a pin shaft, as shown in FIG. 9c, the first magnetic attraction portion C1 may be disposed on the hinging portion. It should be understood that, from a perspective of mechanics, the first magnetic attraction portion C1 is disposed at a position that is on the swinging member 131 and that is close to a position in which the swinging member 131 is rotatably connected to the linkage member 132, so that a higher benefit can be achieved. In other words, larger displacement effect is achieved through smaller magnetic attraction force.

The first magnetic attraction portion C1 is disposed, so that the swinging member 131 is driven to rotate only when the first magnetic attraction portion C1 is magnetically attracted, and the sliding member 133 is driven, through the linkage member 132, to release cooperation with the locking blocker 111. In this way, the locking assembly 13 is unlocked, and the slot structure 1 has higher safety. When the slot structure 1 is in an idle state, the baffle 12 may seal and block the opening a1 of the opening slot A, so that a foreign object is prevented from entering the opening slot A and blocking or damaging the opening slot A.

When the locking assembly 13 is in the unlocking station and the baffle 12 is driven to rotate around the second rotation center Q2 to drive the locking assembly 13 to rotate around the first rotation center Q1, action force applied to the baffle 12 further needs to overcome the gravity of the locking assembly 13 falling on the baffle 12.

As shown in FIG. 10, in some embodiments, the first rotation center Q1 of the swinging member 131 is parallel to the second rotation center Q2 of the baffle 12. When the baffle 12 rotates around the second rotation center Q2 to drive the locking assembly 13 to rotate around the first rotation center Q1, a same rotation direction of actions of the baffle 12 and the locking assembly 13 may be maintained, and effect of opening the baffle 12 may also be achieved. When the baffle 12 rotates around the first rotation center Q1 clockwise, the sliding member 133 in the locking assembly 13 slides on the baffle 12.

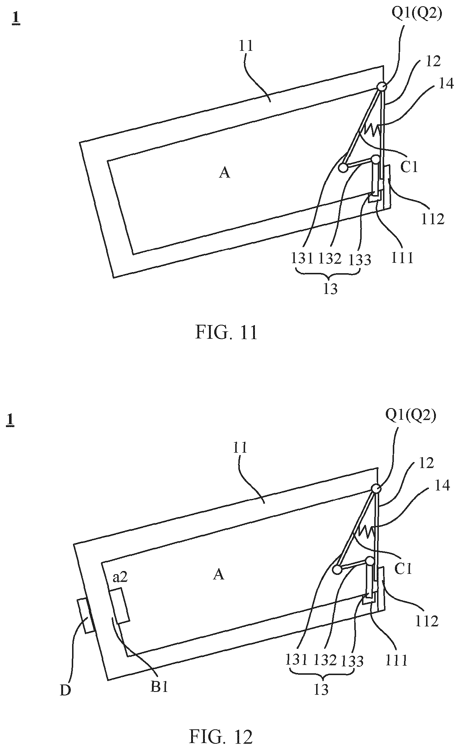

In an ideal state, in a process in which the elastic reset member 14 releases elastic potential energy, the baffle 12 may be maintained at the opening a1 by relying on gravity of the baffle 12, so that the elastic potential energy released by the elastic reset member 14 can drive the swinging member 131 to rotate toward a side away from the baffle 12. As shown in FIG. 11, a limiting stopper 112 may be further disposed on the slot 11 at the opening a1 of the opening slot A, to ensure that the elastic reset member 14 does not drive the baffle 12 to rotate toward the side away from the slot bottom a2 and to expose the opening a1. The limiting stopper 112 is specifically disposed on the side that is of the baffle 12 and that faces away from the slot bottom a2. The limiting stopper 112 is located on a path on which the baffle 12 rotates around the first rotation center Q1 toward the side away from the slot bottom a2, and may limit rotation of the baffle 12 toward the side away from the slot bottom a2. When the first magnetic attraction portion C1 is no longer magnetically attracted, the baffle 12 rotates, under an action of gravity, around the second rotation center Q2 toward the side away from the slot bottom a2 to a position at which the opening a1 is sealed. Because the baffle 12 is blocked by the limiting stopper 112, the baffle 12 does not continue to rotate toward the side away from the slot bottom a2. The elastic reset member 14 releases elastic potential energy, and drives the swinging member 131 to rotate toward the side close to the slot bottom a2. The swinging member 131 drives, through the linkage member 132, the sliding member 133 to move along the third direction Z until the sliding member 133 falls into the locking blocker 111, so that the locking assembly 13 switches from the unlocking station to the locking station.

As shown in FIG. 12, when the slot structure 1 provided in this embodiment of this application is used for the portable terminal device to be inserted into or fastened to, in consideration of a charging requirement of the portable terminal device, a charging port B1 may be disposed in the opening slot A of the slot 11, and the charging port B1 may be specifically located at the slot bottom a2. A connection port D electrically connected to the charging port B1 is disposed in the slot 11. The connection port D may be externally connected to a power supply such as a battery of a vehicle, so that the portable terminal device may be charged through the charging port B1 of the slot 11. The connection port D may be a lightning (lightning) interface, a Type-C interface, or a mini universal serial bus (universal serial bus, USB) interface. This is not limited herein.

To facilitate electrical signal transmission, the charging port B1 herein may be specifically a contact charging port.

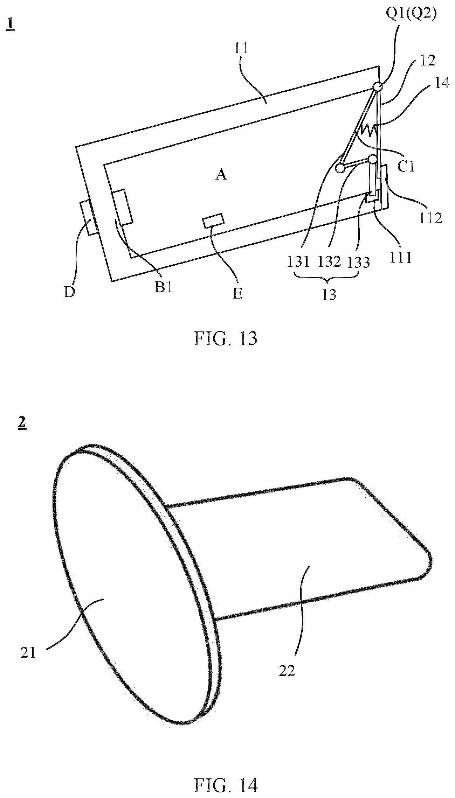

Possibly, as shown in FIG. 13, a fastening portion E may be disposed in the opening slot A, to further fasten the structure inserted into the opening slot A. When the to-be-inserted member is inserted into the opening slot A, the fastening portion E can fasten the to-be-inserted member relative to the opening slot A. The fastening portion E may be a protrusion protruding from an inner wall of the opening slot A, and the to-be-inserted member is fastened through friction force between the protrusion and the to-be-inserted member. The fastening portion E may alternatively be a clamping slot, and a clamping part that can be clamped into and cooperate with the clamping slot is correspondingly disposed on the to-be-inserted member, and the to-be-inserted member is fastened in the opening slot A through clamping and cooperation between the clamping part and the clamping slot.

An embodiment of this application further provides the support 2. As shown in FIG. 14, the support 2 includes the panel 21 and the support rod 22, and one end of the support rod 22 is rotatably connected to the panel 21. The panel 21 may be used for an electronic device to be placed on and fastened to. The electronic device is fastened to the panel 21, and the support rod 22 may be fastened to another fixed apparatus, to provide a support point for the electronic device, so that hands of the consumer can be freed, and the consumer does not need to hold the electronic device. For example, the support 2 may be fastened to the slot structure 1 in the foregoing embodiment. Specifically, the support rod 22 may be inserted into the opening slot A of the slot 11 for fastening. For example, the panel 21 is a circle, and an area of the circle is greater than a cross-sectional area of the support rod 22. The panel 21 with a relatively large area can have a relatively large contact area with the electronic device fastened to the panel 21, to provide good stable support for the electronic device.

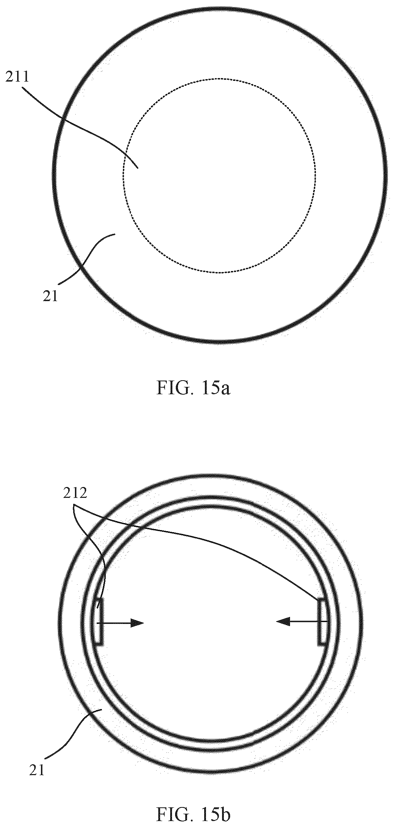

The installing portion used for the electronic device to be fastened to may be disposed on the panel 21, so that the electronic device is fastened. For example, as shown in FIG. 15a, the installing portion is a magnetic attraction structural member 211, and the magnetic attraction structural member 211 can be magnetically attracted to a structure having a magnetic attraction function in the electronic device, so that the electronic device is magnetically attached to the panel 21. The magnetic attraction structural member 211 may be hidden in the panel 21, and the magnetic attraction structural member 211 is shown by a dashed line herein. It should be understood that a shape, position, and size of the magnetic attraction structural member 211 in this example are merely examples.

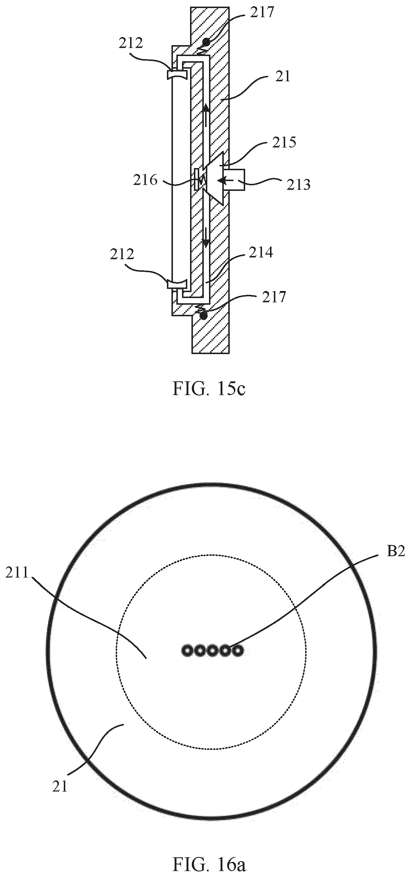

Alternatively, as shown in FIG. 15b, for example, the installing portion is two clamping members 212 that are symmetrically disposed. The two clamping members 212 may provide the electronic device with clamping force in two opposite directions as shown by arrows in FIG. 15b, so that the electronic device can be fastened. When the electronic device needs to be removed, the two clamping members 212 need to move in opposite directions to release the clamping force applied to the electronic device. Based on a structure of the elastic clamping member 212, as shown in FIG. 15c, an unlocking button 213, a driving portion 215, a transmission portion 214, a first elastic member 216, and a second elastic member 217 that are configured to control an action of the clamping member 212 are further disposed on the support 2. The unlocking button 216 is movably installed on the panel 21, and the driving portion 215 is fastened to a side that is of the unlocking button 213 and that faces the panel 21. The driving portion 215 is fastened to the panel 21 through the elastic member 216. A cross section of the driving portion 215 gradually decreases along a direction in which the unlocking button 213 points to the driving portion 215. For example, the driving portion 215 is in a conical shape or a circular truncated cone shape. Each clamping member 212 is correspondingly connected to one transmission portion 214, and the transmission portion 214 may be movably installed on the panel 21 along the vertical direction shown in the figure. Each transmission portion 214 may move along the vertical direction shown in the figure, and may drive the two clamping members 212 to approach or move away from each other. The transmission portion 214 is connected to the panel 21 through the second elastic member 217. Each transmission member 214 abuts against the driving portion 215, and a surface that is of the transmission portion 214 and that is used to abut against the driving portion 215 is an oblique surface. When the driving portion 215 moves leftward along the horizontal direction shown in the figure, the two transmission portions 214 may be driven to move away from each other along the vertical direction, so that the two clamping members 212 are driven to move away from each other. In the state shown in FIG. 15c, the panel 21 does not fasten the electronic device. Both the first elastic member 216 and the two second elastic members 217 are in a free state, and a distance between the two clamping members 212 is not sufficient for the electronic device to be placed between the two clamping members 212. In this case, leftward force is applied to the unlocking button 213 along an arrow direction shown in the figure, the unlocking button 213 moves leftward, the driving member 215 compresses the first elastic member 216, and the driving member 215 drives the two transmission members 214 to move away from each other, so that the two clamping members 212 move away from each other until a distance between the two clamping members 212 is sufficient for the electronic device to be placed between the two clamping members 212. The two second elastic members 217 are compressed. After the electronic device is placed between the two clamping members 212, no force is applied to the unlocking button 213, and the first elastic member 216 releases elastic potential energy to drive the driving member 215 and the unlocking button 213 to reset. The two second elastic members 217 release elastic potential energy to drive the two transmission members 214 to approach each other, and the two clamping members 212 approach each other to clamp the electronic device, so that the electronic device is fastened. When the electronic device needs to be removed, provided that force is applied to the unlocking button 213 again, the two clamping members 212 may move away from each other through the driving member 215 and the two transmission members 214, to release clamping on the electronic device. In this case, the electronic device may be removed.

It should be noted that the structure shown in FIG. 15c is merely an example of a possible implementation of fastening the electronic device to the panel 21 through the two clamping members 212 shown in FIG. 15b. Certainly, the two clamping members 212 may alternatively be controlled through other mechanical transmission structures such as a gear and a rack, a thread and a screw, and a crank and a slider, and examples are not described herein again.

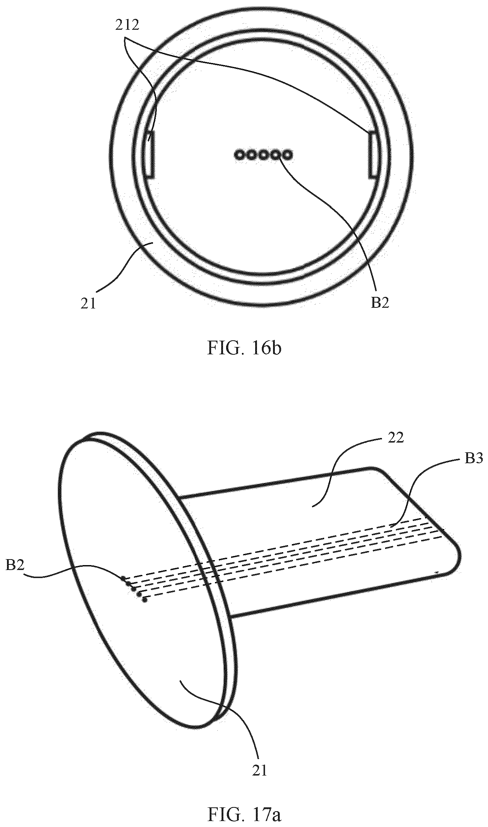

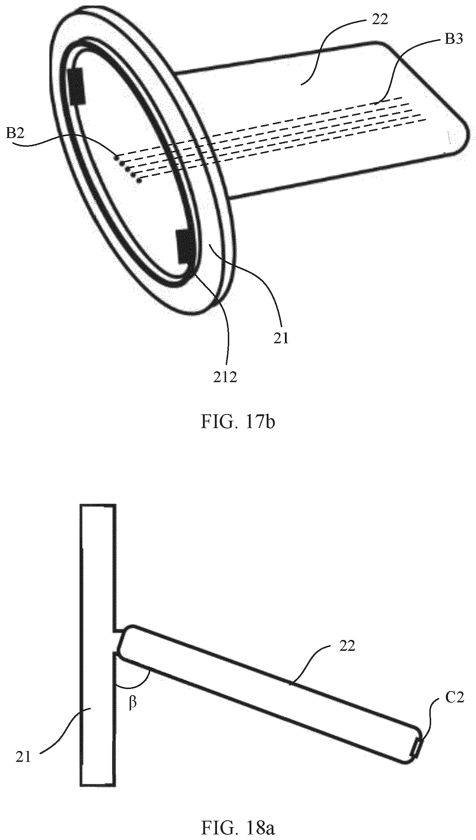

As shown in FIG. 16a and FIG. 16b, when the electronic device fastened to the panel 21 may be charged through the support 2, a charging port B2 may be further disposed on the panel 21, and the charging port B2 may be a contact charging port. With reference to FIG. 17a and FIG. 17b, a connection cable B3 connected to the charging port B2 is disposed in the support rod 22, and the connection cable B3 is used to connect to an external power supply. For example, the connection cable B3 is a flat cable, and certainly may alternatively be another conducting wire. The connection cable B3 is disposed inside the support rod 22, and is shown by a dashed line.

The support rod 22 needs to be fastened to another fastening structure such as the slot structure 1, to provide support for the panel 21 and the electronic device fastened to the panel 21. The support rod 22 needs to bear a relatively large stress. A crushing upon impact portion is disposed on the support rod 22, to ensure safety. Specifically, along an extension direction of the support rod 22, when impact force applied to the support rod 22 reaches a specified threshold, the crushing upon impact portion crushes, deforms or breaks. The specified threshold is force capable of failing a material of the support rod. When the support rod 22 is subject to impact force greater than the specified threshold along the extension direction of the support rod 22, the support rod 22 may crush or break at the crushing upon impact portion. This is equivalent to that the crushing upon impact portion absorbs the impact force.

Specifically, the crushing upon impact portion may be a weak structure whose cross section is smaller than a cross section of the support rod 22, or may be a material with a relatively poor stress bearing capacity. This is not limited in this application. For example, the crushing upon impact portion is a most fragile position on the support rod 22. When force applied to the panel 21 along the extension direction of the support rod 22 reaches 1500 N or more, the crushing upon impact portion deforms or breaks and fails, so that the consumer is prevented from getting injured from collision. Alternatively, different metal materials are used at different positions on the support rod 22, so that the different positions on the support rod 22 are in stepped strength distribution. When the force applied to the panel 21 along the extension direction of the support rod 22 reaches 1500 N or more, a most fragile position first crushes, deforms or breaks, and then the other positions of the support rod 22 successively crush and deform, so that energy transferred to the passenger is reduced and injury is reduced. In addition, when the crushing upon impact portion breaks upon impact, a section obtained after the crushing upon impact portion breaks may be designed as a relatively smooth part, so that impact of damage caused by the broken support rod 22 to the consumer can be reduced.

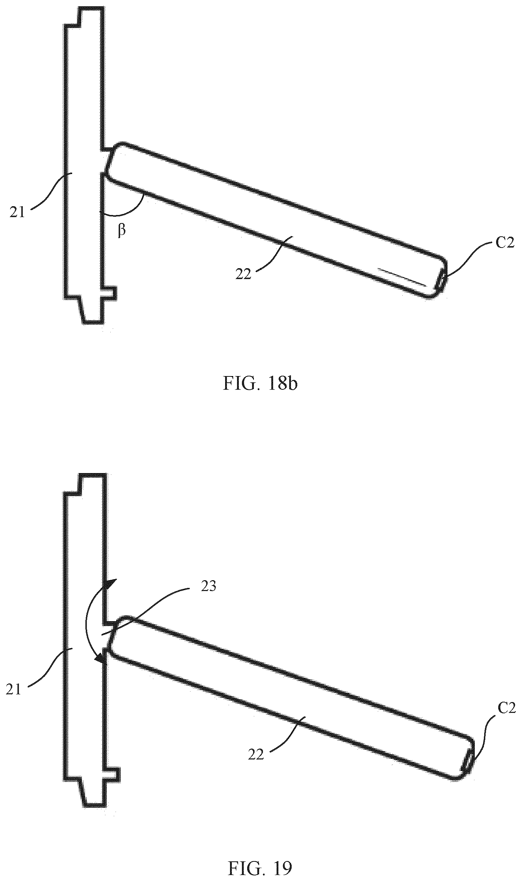

With reference to FIG. 18a and FIG. 18b, the panel 21 is inclined to the support rod 22 by an included angle of β, to facilitate supporting. When the panel 21 is in the vertical direction shown in FIG. 18a and FIG. 18b, one end that is of the support rod 22 and that is used to connect to the panel 21 is higher than one end that is of the support rod 22 and that is away from the panel 21. In such a structure, the support rod 22 can provide more stable support for the panel 21.

Further, refer to FIG. 19. The support 2 is in an applied state, and the panel 21 may be rotatably installed on the support rod 22 through the hinge 23. The panel 21 may rotate relative to the support rod 22 along an arrow direction shown in FIG. 19. In other words, the panel 21 may rotate relative to the support rod 22 around an axis parallel to the horizontal direction to implement pitch rotation. A structure of the hinge 23 is relatively common, and provided that effect of rotating relative to the support rod 22 by the panel 21 can be achieved, this is not limited herein. For example, the panel 21 may be rotated by ±10° relative to the support rod 22, so that an angle of the panel 21 toward the consumer may change, to meet use requirements of consumers of different heights.

In some possible implementations, the support rod 22 of the support 2 may be magnetically fastened to another fixed apparatus in a magnetic attraction manner. As shown in FIG. 19, a second magnetic attraction portion C2 may be disposed at an end of the support rod 22. The second magnetic attraction portion C2 may include a magnetic material, or may include iron.

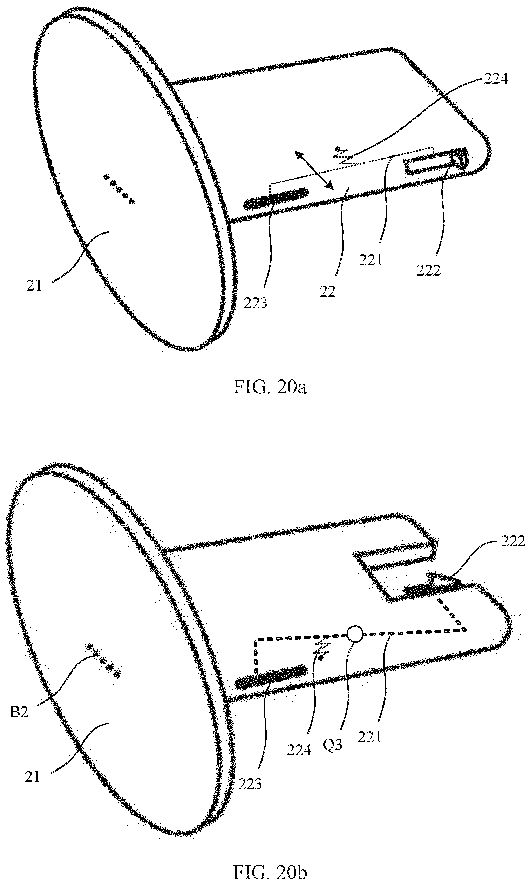

With reference to FIG. 20a and FIG. 20b, a fastener 222 and an unlocking member 223 may be further disposed in the support rod 22 of the support 2. The fastener 222 is configured to fasten the support rod 22 to another structure in a clamping manner. Certainly, the another structure needs to have a structure that can be clamped to the fastener 222. The fastener 222 may be movably installed on the support rod 22 along a direction of an arrow shown in the figure, and the fastener 222 partially protrudes out of the support rod 22, and is partially located in the support rod 22. When the fastener 222 moves toward an inner side of the support rod 22, the fastener 222 can be completely hidden in the support rod 22, and cooperation between the support rod 22 and the another structure is not affected. When the fastener 222 is at least partially located outside the support rod 22, the support rod 22 may be clamped to and cooperate with the another structure through the fastener 222, so that the support rod 22 is fastened. It may be considered that a state in which at least a part of the fastener 222 extends out of the support rod 22 is a locked state, and a state in which the fastener 222 is completely hidden in the support 22 is an unlocked state. The unlocking member 223 is configured to control locking and unlocking of the fastener 222.

For example, as shown in FIG. 20a, the fastener 222 is connected to the unlocking member 223 through a connecting member 221, and the connecting member 221 is connected to the support rod 22 through a third elastic member 224. When the unlocking member 222 is driven to move along the arrow direction, the fastener 222 and the unlocking member 223 may be driven to move synchronously through the connecting member 221. The third elastic member 224 can provide recovery force for the connecting member 221. The connecting member 221 has a first work station in which the fastener 222 extends out of the support rod 22 and a second work station in which the fastener 222 is hidden in the support rod 22. When the third elastic member 224 is in a free state, the fastener 222 extends out of the support rod 22.

Alternatively, as shown in FIG. 20b, the fastener 222 is connected to the unlocking member 223 through the connecting member 221, and the connecting member 221 may be rotatably installed on the support rod 22 around a third rotation center Q3. The fastener 222 and the unlocking member 223 are respectively disposed at two ends of the connecting member 221, and a direction in which the fastener 222 extends out of the support rod 22 is opposite to a direction in which the unlocking member 223 extends out of the support rod 22. When the connecting member 221 rotates around the third rotation center Q3, a movement direction of the fastener 222 is opposite to a movement direction of the unlocking member 223. The connecting member 221 is connected to the support rod 22 through the third elastic member 224, and the third elastic member 224 can provide recovery force for the connecting member 221.

It should be understood that the support 2 may alternatively be fastened to the another structure through another structure. The fastener 222 and the unlocking member 223 herein are merely an example structure.

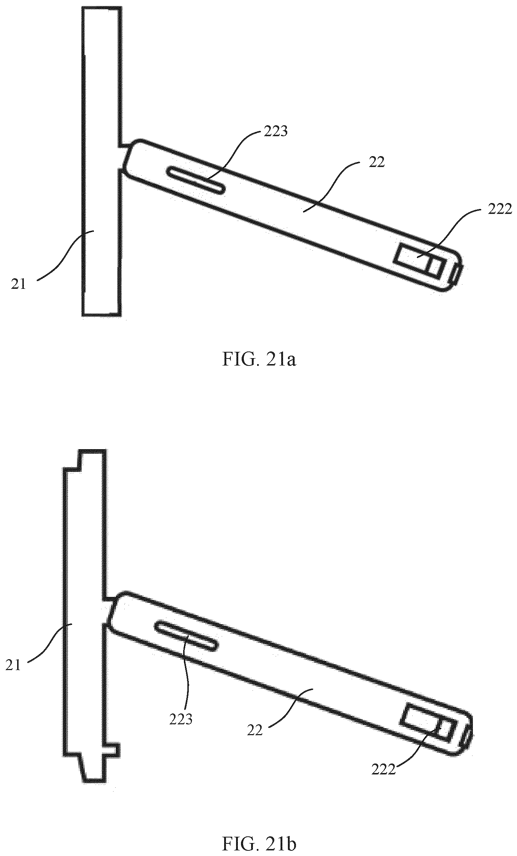

As shown in FIG. 21a and FIG. 21b, when the support 2 is fastened to the another structure, the fastener 222 is used for the another structure to be clamped to and fastened to. Therefore, the fastener 222 is disposed on a side that is of the support rod 22 and that is slightly away from the panel 21. A user needs to operate the unlocking member 223 to control the fastener 222. Therefore, the unlocking member 223 is disposed on a side that is of the support rod 22 and that is close to the panel 21.

A protective layer may be coated on a surface of the support 2, to protect the support 2, and the protective layer enables the support 2 to have good scratch-proof performance.

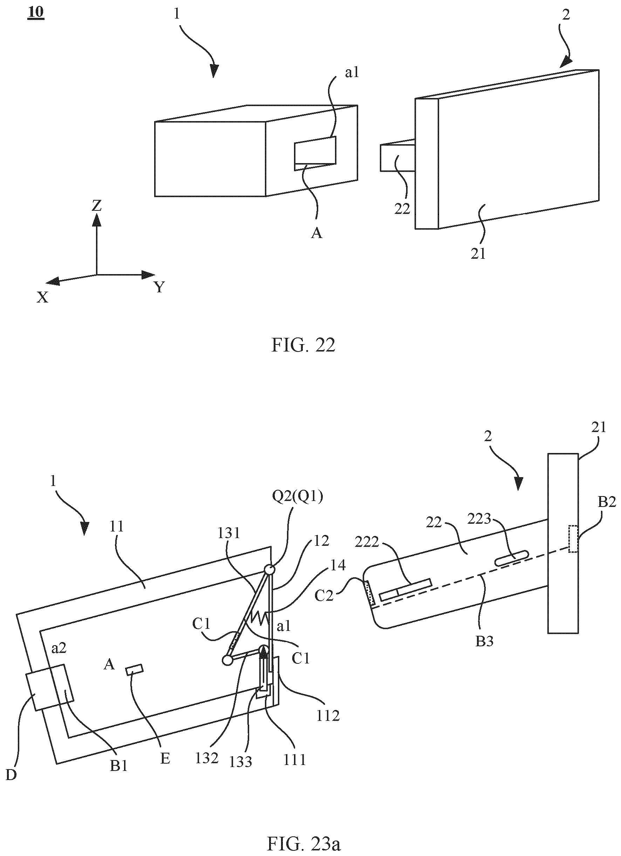

An embodiment of this application further provides a support apparatus. As shown in FIG. 22, the support apparatus includes the slot structure 1 and the support 2, and the support 2 may be inserted into and cooperate with the slot structure 1. During use, the slot structure 1 may be disposed on the fixed apparatus, the support 2 is fastened to the portable terminal device, and the support 2 is inserted into the slot structure 1 to implement insertion and fastening, so that the portable terminal device may be fastened to the fixed apparatus through the support 2. The support apparatus may be used in any occasion in which a consumer may use a portable terminal device, for example, at home or on a transportation tool. According to different application scenarios, the fixed apparatus herein may be, for example, a seat of a vehicle, a seat of a civil aircraft, a bedside table at home, or the like.

For the slot structure 1, refer to the slot structure 1 and the support 2 provided in the foregoing embodiments. The support rod 22 of the support 2 may be inserted into the opening slot A of the slot structure 1. In application, the opening a1 of the opening slot A of the slot structure 1 faces the support 2, so that the support rod 22 of the support 2 is conveniently inserted into the opening slot A of the slot structure 1, to implement insertion and cooperation between the support 2 and the slot structure 1.

The panel 21 may be fastened to the portable terminal device. In other words, the panel 21 is fastened to the portable terminal device, and may be transferred as the portable terminal device transfers. The panel 21 may alternatively be in a state in which the panel 21 is used for the portable terminal device to be fastened to. In other words, the panel 21 may be detachably connected to the portable terminal device, for example, the structure shown in FIG. 15a or FIG. 15b. When the portable terminal device is removed, the panel 21 may be removed from the portable terminal device, and the portable terminal device and the panel 21 are independent of each other.

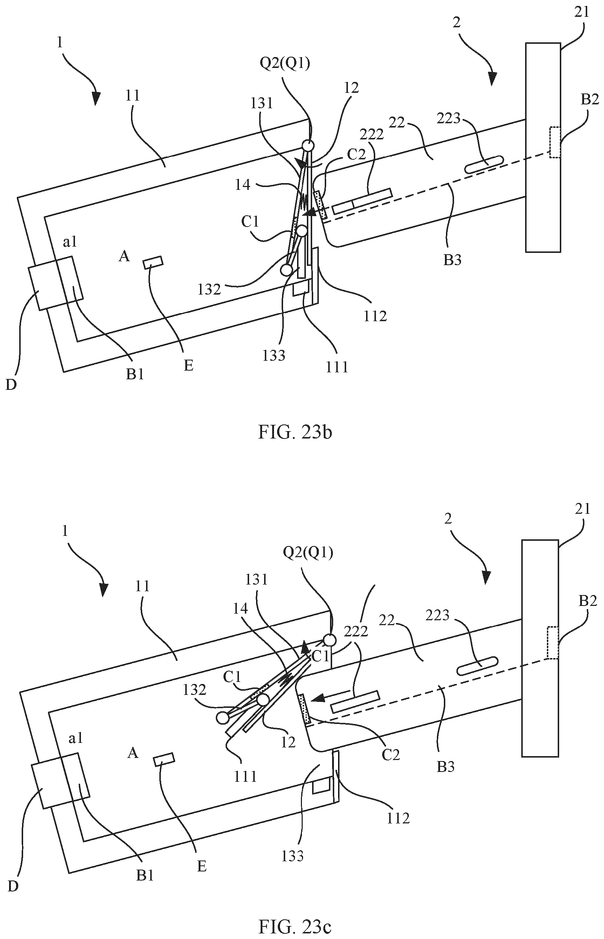

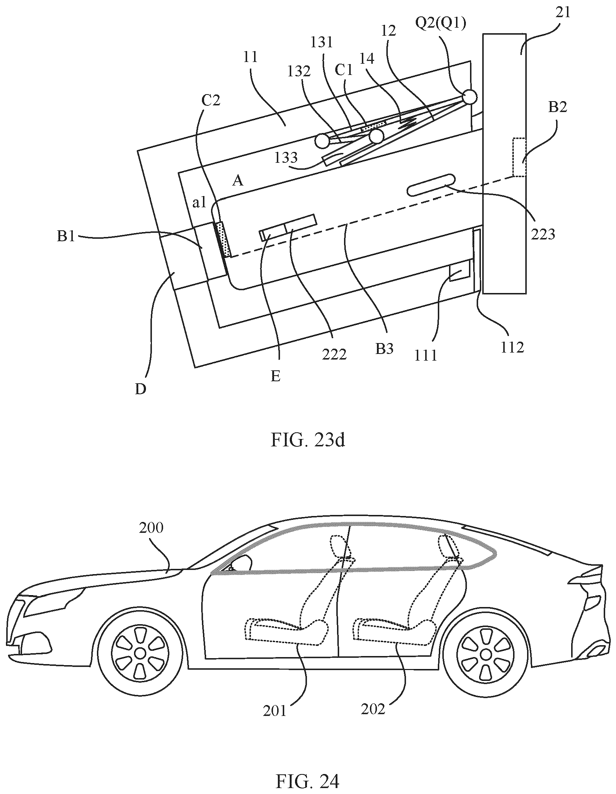

For insertion and cooperation between the slot structure 1 and the support 2, refer to examples in FIG. 23a and FIG. 23b. The first magnetic attraction portion C1 is disposed on the swinging member 131, and the second magnetic attraction portion C2 is disposed on an end that is of the support rod 22 of the support 2 and that is away from the panel 21. When the support rod 22 of the support 2 approaches the baffle 12 and a distance between the support rod 22 and the baffle 12 is close enough for the first magnetic attraction portion C1 and the second magnetic attraction portion C2 to generate magnetic attraction force, the second magnetic attraction portion C2 may attract the first magnetic attraction portion C1, so that the swinging member 131 rotates around the first rotation center Q1 to the side close to the baffle 12, and the swinging member 131 drives, through the linkage member 132, the sliding member 133 to slide in the direction away from the locking blocker 111. When the sliding member 133 is detached from the locking blocker 111, the locking assembly 13 is in the unlocking station. In this case, the entire locking assembly 13 may rotate around the first rotation center Q1. As shown in FIG. 23b, the support rod 22 of the support 2 is in contact with the baffle 12 and applies force in a direction indicated by an arrow to the baffle 12. A direction of the force is the extension direction of the opening slot A. The support rod 2 may drive the baffle 12 to rotate around the second rotation center Q2 toward the slot bottom a2 of the opening slot A, and the baffle 12 may be opened. In this case, the locking assembly 13 is in the unlocking station. As shown in FIG. 23c, the locking assembly 13 may be in lap joint with the baffle 12 and rotate around the first rotation center Q1 toward the slot bottom a2 of the opening slot A. When the support rod 22 of the support 2 is inserted into the opening slot A, as shown in FIG. 23d, the connection cable B3 of the support rod 22 may be electrically connected to the charging port B1 in the opening slot A, to implement an electrical connection between the charging port B2 and the connection port D. When the electronic device is fastened to the panel 21, the electronic device may be charged through the charging port B2.

After the support 2 is taken out, the baffle 12 is restored to a position shown in FIG. 23a under an action of gravity, the swinging member 131 of the locking assembly 13 rotates around the first rotation center Q1 toward the side of the baffle 12, and the sliding member 133 abuts against the baffle 12. The elastic reset member 14 releases elastic potential energy, pushes the sliding member 111 to slide into the quick locking blocker 111 along the baffle 12, and the locking assembly 13 is restored to the locking station, and locks the baffle 12.

For a magnetic attraction function between the first magnetic attraction portion C1 and the second magnetic attraction portion C2, a distance between the support rod 22 and the baffle 12 and selection of a magnetic material need to be considered. This is not limited in this embodiment of this application. One of the first magnetic attraction portion C1 and the second magnetic attraction portion C2 may include a magnetic material, and the other one may include iron, or both may include a magnetic material. For example, the first magnetic attraction portion C1 is a magnet, and the second magnetic attraction portion C2 is a magnet or a material including iron powder. Alternatively, the first magnetic attraction portion C1 is a magnet or a material including iron powder, and the second magnetic attraction portion C2 is a magnet. Alternatively, both the first magnetic attraction portion C1 and the second magnetic attraction portion C2 are magnets.

An embodiment of this application further provides a vehicle. As shown in FIG. 24, the vehicle includes a vehicle body 200, and a front-row seat 201 and a rear-row seat 202 that are disposed in the vehicle body 200.

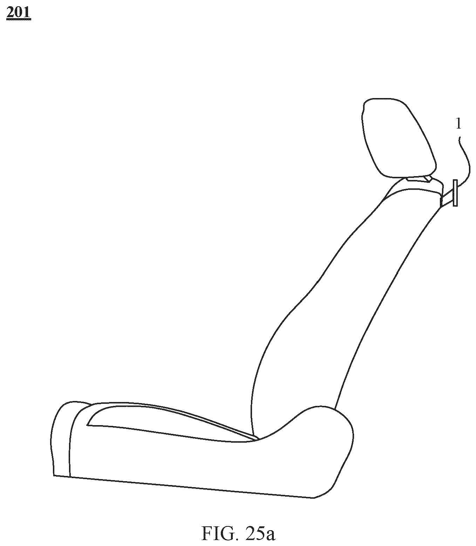

As shown in FIG. 25a, the slot structure 1 is disposed on a back side of the front-row seat 201. A structure having the second magnetic member C2 may be inserted into the opening slot A of the slot structure 1, so that the structure having the second magnetic member C2 is fastened.

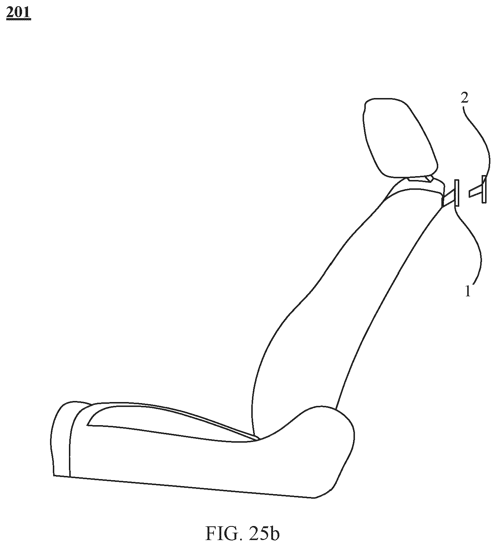

Alternatively, as shown in FIG. 25b, the support apparatus 10 is disposed on the back side of the front-row seat 201. When a passenger sits in the rear-row seat 202, the electronic device may be inserted into the slot structure 1 through a structure such as the support 2, to free two hands from doing other things. Because the baffle 12 of the slot structure 1 may be locked through the locking assembly 13 in an idle state, a foreign object may be prevented from entering and blocking or damaging the slot structure 1 in the idle state. When the support 2 in the foregoing embodiments is used, because the support 2 has the crushing upon impact portion, the support rod 22 can crush or break at a preset position when being subject to impact force along the extension direction of the support rod 22. This improves safety.

The connection port D of the slot structure 1 is connected to the battery of the vehicle, and may charge, through the battery of the vehicle, the electronic device fastened to the support 2. In addition, a detection unit connected to a control system of the vehicle is further disposed on the support 2, and can detect whether the electronic device is fastened to the panel 21. When the passenger removes the electronic device from the panel 21, the detection unit sends information to the control system of the vehicle, to prompt the passenger to remove the support 2. After the support 2 is removed, the baffle 12 of the slot structure 1 may seal the opening a1, so that a foreign object is prevented from entering the opening slot A.

The slot structure 1 may be disposed in a hidden manner in the front-row seat 201, and only the opening a1 is exposed for the support 2 to be inserted into, so that space is saved, and a passenger obtains good space experience. Alternatively, the slot structure 1 may partially extend to the front-row seat 201. In this case, the slot structure 1 may be used for an object to be suspended on.

It should be understood that, when the slot structure 1 is used in the vehicle, that the slot structure 1 is fastened to the back side of the front-row seat 201 is merely an application example. The slot structure 1 may alternatively be disposed at a position such as a vehicle frame, a vehicle door, or a central control, to meet different use requirements of the consumer.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A slot structure (1), comprising:
a slot (11), wherein the slot (11) has an opening slot (A), and a locking blocker (111) is further disposed in the slot (11);
a baffle (12), wherein the baffle (12) is rotatably installed at an opening of the opening slot (A); and
a locking assembly (13), wherein the locking assembly (13) is movably installed in the opening slot (A), and is in contact with the baffle (12); the locking assembly (13) has a locking station in which the locking assembly (13) is locked to and cooperates with the locking blocker (111) and an unlocking station in which the locking assembly (13) is detached from the locking blocker (111); and a first magnetic attraction portion (C1) is disposed on the locking assembly (13), wherein
when the first magnetic attraction portion (C1) is subject to magnetic attraction force toward a side that is of the baffle (12) and that faces away from the locking assembly (13), the locking assembly (13) switches from the locking station to the unlocking station.

2. The slot structure (1) according to claim 1, wherein the locking assembly (13) comprises a swinging member (131), a linkage member (132), and a sliding member (133); and
the swinging member (131) is rotatably connected to the slot (11), and the sliding member (133) slidably cooperates with the locking blocker (111), and is in contact with the baffle (12); one end of the linkage member (132) is rotatably connected to the swinging member (131), and the other end of the linkage member (132) rotatably cooperates with the sliding member (133); and the first magnetic attraction portion (C1) is disposed on the swinging member (131).

3. The slot structure (1) according to claim 2, wherein a first rotation center of the swinging member (131) is parallel to a first rotation center of the baffle (12).

4. The slot structure (1) according to any one of claims 1 to 3, wherein the first magnetic attraction portion (C1) comprises a magnetic material or iron.

5. The slot structure (1) according to any one of claims 1 to 4, further comprising an elastic reset member (14), wherein the elastic reset member (14) is connected between the locking assembly and the baffle (12); and when the first magnetic attraction portion (C1) is magnetically attracted toward the side that is of the baffle (12) and that faces away from the locking assembly (13), the elastic reset member (14) is in a compressed force storage state.

6. The slot structure (1) according to any one of claims 1 to 5, wherein a charging port (B1) is disposed in the opening slot (A), the slot (11) has a connection port (D) electrically connected to the charging port (B1), and the connection port (D) is configured to connect to an external power supply.

7. The slot structure (1) according to claim 6, wherein the charging port (B1) is a contact charging port.

8. The slot structure (1) according to any one of claims 1 to 7, wherein a fastening portion (E) is disposed in the opening slot, and the fastening portion (E) is used for a structure inserted into the opening slot (A) to be clamped to.

9. The slot structure (1) according to any one of claims 1 to 8, wherein an extension direction of the opening slot (A) is inclined by an included angle to a plane on which the opening (a1) is located; and along a direction perpendicular to the plane on which the opening (a1) is located, a slot bottom (a2) of the opening slot is lower than the opening (a1) of the opening slot (A).

10. The slot structure (1) according to any one of claims 1 to 9, wherein a limiting stopper (112) is further disposed in the slot (11), the limiting stopper (112) is disposed on the side that is of the baffle (12) and that faces away from the locking assembly, and the limiting stopper abuts against the baffle.

11. A support (2), wherein the support (2) comprises a panel (21) and a support rod (22) that is rotatably connected to the panel (21), and the panel (21) is used for an electronic device to be fastened to; and a second magnetic attraction portion (C2) is disposed at one end that is of the support rod (22) and that is away from the panel (21).

12. The support (2) according to claim 11, wherein a charging port (B2) configured to charge the electronic device is disposed on the panel (21), and a connection cable (B3) configured to connect the charging port (B2) to an external power supply is disposed in the support rod (22).

13. The support (2) according to claim 11 or 12, wherein a connecting member (221) and a fastener (222) and an unlocking member (223) that are fastened to the connecting member (221) are disposed in the support rod (22); and
the connecting member (221) is movably disposed in the support rod (22), and is connected to the support rod (22) through a third elastic member (224); and the connecting member (221) has a first work station in which the fastener (222) protrudes from the support rod (22) and a second work station in which the fastener (222) is hidden in the support rod (22), and the third elastic member (221) has a tendency to maintain the connecting member (221) in the first work station.

14. The support (2) according to any one of claims 11 to 13, wherein a crushing upon impact portion is disposed on the support rod (22); along an extension direction of the support rod (22), when impact force applied to the support rod (22) reaches a specified threshold, the crushing upon impact portion crushes, deforms, or breaks; and the specified threshold is force capable of failing a material of the crushing upon impact portion.

15. A support apparatus, comprising the slot structure (1) according to any one of claims 1 to 10 and the support (2) according to any one of claims **11** to 14, wherein
the support rod (22) of the support (2) is configured to be inserted into and cooperate with the opening slot (A) of the slot structure (1), and the second magnetic attraction portion (C2) is configured to magnetically attract the first magnetic attraction portion (C1).

16. A vehicle, comprising a vehicle body, wherein the slot structure (1) according to any one of claims 1 to 10 or the support apparatus according to claim 15 is disposed in the vehicle body.

17. A lock mechanism, comprising:
a lock body (101), wherein a locking blocker (1011) is disposed on the lock body (101); and
a lock cylinder (102), wherein the lock cylinder (102) is movably installed in the lock body (101); the lock cylinder (102) has a locking station in which the lock cylinder (102) is locked to and cooperates with the locking blocker (1011) and an unlocking station in which the lock cylinder (102) is detached from the locking blocker (1011); and a first magnetic attraction portion (C1) is further disposed on the lock cylinder (102), and when the first magnetic attraction portion (C1) is subject to magnetic attraction force, the lock cylinder (102) switches from the locking station to the unlocking station.

18. The lock mechanism according to claim 17, wherein the lock cylinder (102) comprises a swinging member (1021), a linkage member (1022), and a sliding member (1023);
the swinging member (1021) is rotatably connected to the lock body (101), and the sliding member (1023) slidably cooperates with the locking blocker (1011); and one end of the linkage member (1022) is rotatably connected to the swinging member (1021), and the other end of the linkage member (1022) slidably cooperates with the sliding member (1023); and
the first magnetic attraction portion (C1) is disposed on the swinging member (1021); and when the first magnetic attraction portion (C1) is subject to the magnetic attraction force, the swinging member (1021) drives, through the linkage member (1022), the sliding member (1023) to move in a direction of sliding out of the locking blocker (1011).

19. The lock mechanism according to claim 17 or 18, further comprising an elastic reset member (103), wherein the elastic reset member (103) is connected between the lock cylinder (102) and the lock body (101); and when the first magnetic attraction portion (C1) is subject to the magnetic attraction force, the elastic reset member (103) is in a compressed force storage state.
